# EUROPEAN PATENT APPLICATION

(11) **EP 4 113 486 A1**
(43) Date of publication of application: **04.01.2023**
(21) Application number: 21759737.6
(22) Date of filing: 26.02.2021
(51) Int. Cl.: G09B 29/00, G09B 29/10, G09G 5/00, G09G 5/10, G09G 5/36, G09G 5/38, G01C 21/26, G09F 9/00, G06F 3/0484

(54) **IMAGE PROCESSING DEVICE, DISPLAY SYSTEM, IMAGE PROCESSING METHOD, AND RECORDING MEDIUM**

(30) Priority: 28.02.2020 JP 2020034069
(71) Applicant: Sony Group Corporation, Minato-Ku, Tokyo, 108-0075 (JP)
(72) Inventor: HAYASHI, Maho, Tokyo 108-0075 (JP); NISHIDE, Sachiko, Tokyo 108-0075 (JP); SHIRAKAWA, Miyuki, Tokyo 108-0075 (JP); MURAKAMI, Tomonari, Tokyo 108-0075 (JP); SUZUKI, Akio, Tokyo 108-0075 (JP); YAMAGISHI, Asami, Tokyo 108-0075 (JP); NAGATA, Koji, Tokyo 141-8610 (JP); TOMONAGA, Seishi, Tokyo 108-0075 (JP); IKEDA, Tetsuo, Tokyo 108-0075 (JP); NAGARA, Toru, Tokyo 108-0075 (JP); TAKEUCHI, Hiroshi, Tokyo 141-0022 (JP); TAKAMATSU, Takashi, Tokyo 108-0075 (JP)
(74) Representative: Witte, Weller & Partner Patentanwälte mbB
(86) International application number: PCT/JP2021/007266
(87) International publication number: WO 2021/172492

(57) **Abstract**

It is possible to display a frame that is comfortable for an occupant. An image processing apparatus (10) according to the present disclosure includes: an image/sound creation unit (142) that: creates a frame belonging to one of a plurality of modes as a frame of an application to be displayed on a screen provided in a vehicle; and moves before-switching and after-switching frames in a first direction parallel to or perpendicular to a vehicle travel direction in a case where an operation for switching from a frame that is being displayed to another frame in the same mode for the application is input, and moves before-switching and after-switching frames in a second direction perpendicular to the first direction in a case where an operation for switching from a frame that is being displayed to another frame in a different mode for the application is input.

## Description

### TECHNICAL FIELD

The present disclosure relates to an image processing apparatus, a display system, an image processing method, and a recording medium.

### BACKGROUND ART

There has been known a technology for displaying content on a screen such as an organic EL sheet installed on a ceiling in a vehicle. As an example, there has been known a technology for displaying a sky view seen from a current position on a screen. Further, as another example, there has been known a technology for displaying, on a screen, one road along which a route to a destination is directed and a position on the road.

### CITATION LIST

### PATENT DOCUMENT

Patent Document 1: Japanese Patent Application Laid-Open No. 2002-328624

### SUMMARY OF THE INVENTION

### PROBLEMS TO BE SOLVED BY THE INVENTION

However, the above-described conventional technology has a problem that it may not be possible to display a frame that is comfortable for an occupant. For example, it has been known that an occupant is likely to be carsick when the occupant operates frames in a vehicle.

Therefore, the present disclosure proposes an image processing apparatus, a display system, an image processing method, and a recording medium capable of displaying a frame that is comfortable for an occupant.

### SOLUTIONS TO PROBLEMS

In order to solve the above-described problem, an image processing apparatus according to an aspect of the present disclosure includes: a creation unit that creates a frame belonging to one of a plurality of modes as a frame of an application to be displayed on a screen provided in a vehicle; and a switching unit that moves before-switching and after-switching frames in a first direction parallel to or perpendicular to a vehicle travel direction in a case where an operation for switching from a frame that is being displayed to another frame in the same mode for the application is input, and moves before-switching and after-switching frames in a second direction perpendicular to the first direction in a case where an operation for switching from a frame that is being displayed to another frame in a different mode for the application is input.

### BRIEF DESCRIPTION OF DRAWINGS

Fig. 1 is a diagram illustrating an example of a configuration of an image processing apparatus according to a first embodiment.
Fig. 2 is a diagram (1) illustrating an example of a screen.
Fig. 3 is a diagram (2) illustrating an example of a screen.
Fig. 4 is a diagram for explaining modes and panels.
Fig. 5 is a diagram for explaining a travel direction.
Fig. 6 is a diagram (1) for explaining an animation of frame transition.
Fig. 7 is a diagram (2) for explaining an animation of frame transition.
Fig. 8 is a diagram (3) for explaining an animation of frame transition.
Fig. 9 is a diagram for explaining an animation of frame transition between modes.
Fig. 10 is a diagram for explaining an animation of frame transition in one mode.
Fig. 11 is a flowchart illustrating a flow of processing by the image processing apparatus according to the first embodiment.
Fig. 12 is a diagram illustrating an example of a frame in which a route is displayed.
Fig. 13 is a diagram illustrating an example of a frame in which icons of destinations and occupants are displayed.
Fig. 14 is a flowchart illustrating a flow of destination adding processing.
Fig. 15 is a diagram illustrating an example of a frame in which a playlist is displayed.
Fig. 16 is a diagram illustrating an example of a frame in which videos to be reproduced are displayed.
Fig. 17 is a diagram illustrating a shift of a frame between screens.
Fig. 18 is a diagram illustrating an example of a frame after the shift.
Fig. 19 is a block diagram illustrating an example of schematic configuration of a vehicle control system.
Fig. 20 is a diagram (1) depicting an example of an installation position of an imaging section.
Fig. 21 is a diagram (2) depicting an example of an installation position of an imaging section.
Fig. 22 is a diagram illustrating an example of a configuration of a network system.

### MODE FOR CARRYING OUT THE INVENTION

Preferred embodiments of the present disclosure will be described in detail below with reference to the accompanying drawings. Note that, in the present specification and the drawings, components having substantially the same functional configuration are denoted by the same reference sign, and overlapping description thereof will be omitted.

In addition, description will be given in the following order.
1. First Embodiment
2. Example of Application to Mobile Body

### [1. First Embodiment]

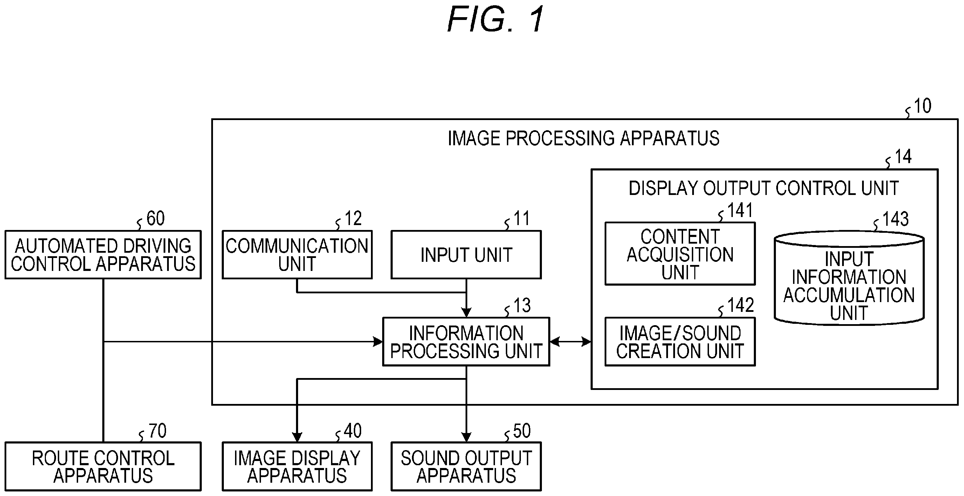

Fig. 1 is a diagram illustrating an example of a configuration of an image processing apparatus according to a first embodiment. An image processing apparatus 10 illustrated in Fig. 1 is an apparatus for performing processing related to displaying content on a screen provided in a vehicle having an automated driving function.

An input unit 11 is an input device that receives an input of a traveling status of the vehicle, a situation of an occupant, an operation by the occupant, and the like. The input unit 11 includes various sensors such as an image sensor, a depth sensor, and a touch sensor. The image sensor is a sensor that acquires a two-dimensional image, such as a visible light camera or an infrared camera. The depth sensor is a sensor that acquires three-dimensional information including a depth, such as a stereo camera or a sensor capable of performing a time of flight method, a structured light method, or the like. The input unit 11 receives, as an operation by an occupant, an operation through a touch display, an operation by voice, a gesture operation using a skeleton field, or the like.

A communication unit 12 is an interface for performing data communication with another device. The communication unit 12 is achieved by, for example, a network interface card (NIC) or the like.

An information processing unit 13 executes each processing related to displaying content. The information processing unit 13 is achieved by, for example, a computer including a central processing unit (CPU). The information processing unit 13 performs processing for displaying an image included in the content on the basis of the information received from the input unit 11. The information processing unit 13 controls plotting of multi-contents on a window or the like for displaying applications and delivers an event such as a touch on each content. The information processing unit 13 performs processing corresponding to a control layer of a general OS.

An image display apparatus 40 is an apparatus that displays the image included in the content. The image display apparatus 40 may include a projector and a projector screen. Alternatively, the image display apparatus 40 may be a display such as a liquid crystal display. Hereinafter, a surface on which an image is actually displayed of the projector screen, the liquid crystal display, or the like will be simply referred to as the screen.

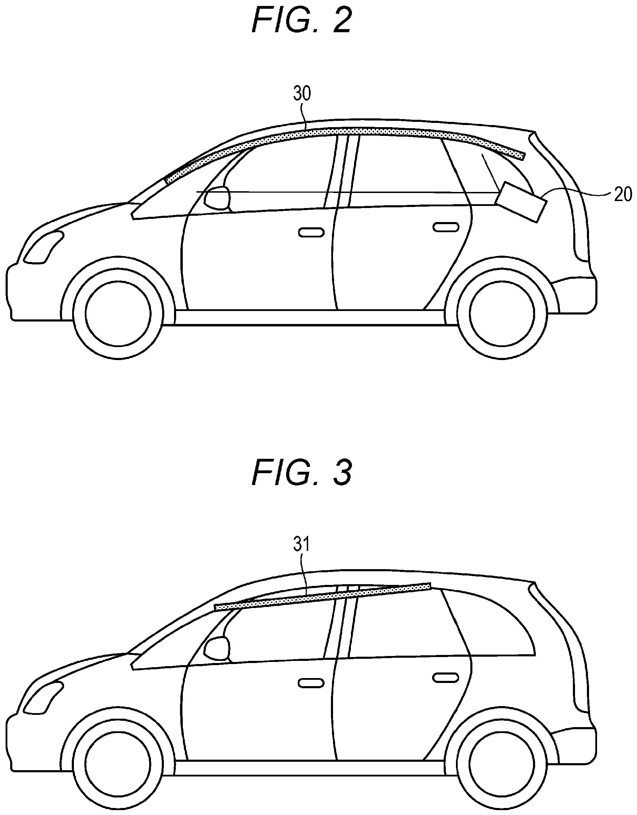

Fig. 2 is a diagram (1) illustrating an example of a screen. As illustrated in Fig. 2, the image display apparatus 40 may include a projector 20 and a projector screen 30. As illustrated in Fig. 2, the projector 20 projects an image from a rear portion of the vehicle onto each screen. The projector 20 may be capable of changing an image projection direction and an image projection height in accordance with the screen shape. The projector 20 may be installed at a rear portion of a back seat or may be attached to a ceiling of the rear portion of the back seat. Alternatively, the projector 20 may be provided on a headrest of a driver's seat or an occupant's seat next to the driver' seat.

Fig. 3 is a diagram (2) illustrating an example of a screen. As illustrated in Fig. 3, the image display apparatus 40 may be a liquid crystal display 31 provided on the ceiling of the vehicle.

A sound output apparatus 50 is a device that outputs a sound included in content. For example, the sound output apparatus 50 is a speaker.

The display output control unit 14 creates an image to be displayed and a sound to be output. The display output control unit 14 is achieved by, for example, a computer including a CPU. As illustrated in Fig. 1, the display output control unit 14 includes a content acquisition unit 141, an image/sound creation unit 142, and an input information accumulation unit 143.

The content acquisition unit 141 acquires content. The content acquisition unit 141 may acquire content from a predetermined storage device, or may acquire content from an external device or another vehicle via a network.

The image/sound creation unit 142 creates a frame belonging to one of a plurality of modes as a frame of an application to be displayed on the screen provided in the vehicle. In addition, in a case where an operation for switching from a frame that is being displayed to another frame in the same mode for the application is input, the image/sound creation unit 142 moves the before-switching frame and the after-switching frame in a first direction parallel to or perpendicular to a vehicle travel direction. On the other hand, in a case where an operation for switching from a frame that is being displayed to another frame in a different mode for the application is input, the image/sound creation unit 142 moves the before-switching frame and the after-switching frame in a second direction perpendicular to the first direction.

The input information accumulation unit 143 is a storage device that accumulates information input by an occupant. For example, the input information accumulation unit 143 accumulates play list information and the like to be described later.

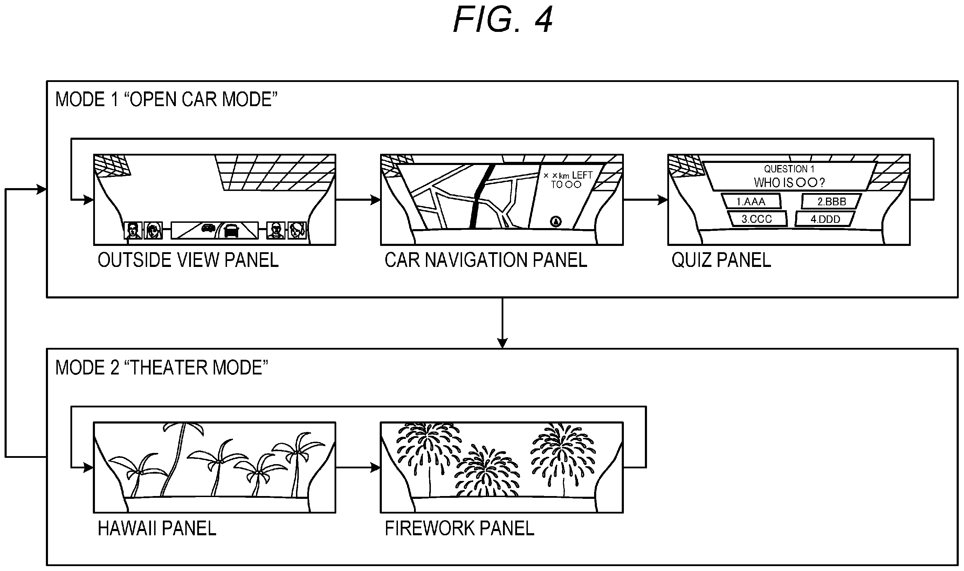

A frame belonging to each mode will be referred to as a panel. Modes and panels will be described with reference to Fig. 4. Fig. 4 is a diagram for explaining modes and panels. As illustrated in Fig. 4, the application has, for example, an open car mode and a theater mode.

In the open car mode, an image obtained by capturing an upward side of the vehicle is displayed as a background, and an image of each content is displayed on the background. For example, only an image obtained by capturing an upward side of the vehicle is displayed on an outside view panel in the open car mode. In addition, for example, a car navigation image on the image obtained by capturing the upward side of the vehicle is displayed on a car navigation panel in the open car mode.

In the theater mode, an image of content mainly for enjoyment is displayed. As an example, a landscape of Hawaii is displayed on a Hawaii panel in the theater mode. In addition, as another example, a video of firework is displayed on a firework panel in the theater mode. Alternatively, a movie, a television program, an image captured by another vehicle, or the like may be displayed on a panel in the theater mode.

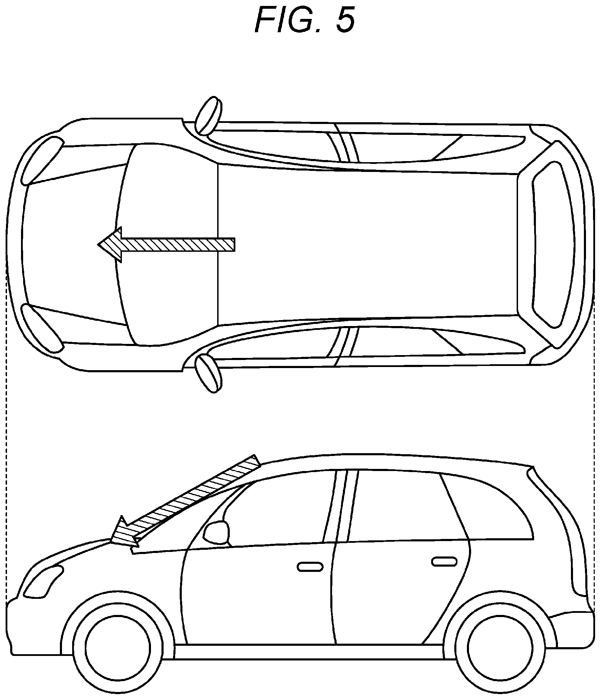

A travel direction will be described with reference to Fig. 5. Fig. 5 is a diagram for explaining the travel direction. The travel direction is a direction in which the vehicle moves forward. However, in a case where the screen is disposed along the windshield, a direction indicated by an arrow in Fig. 5 will be referred to as the travel direction.

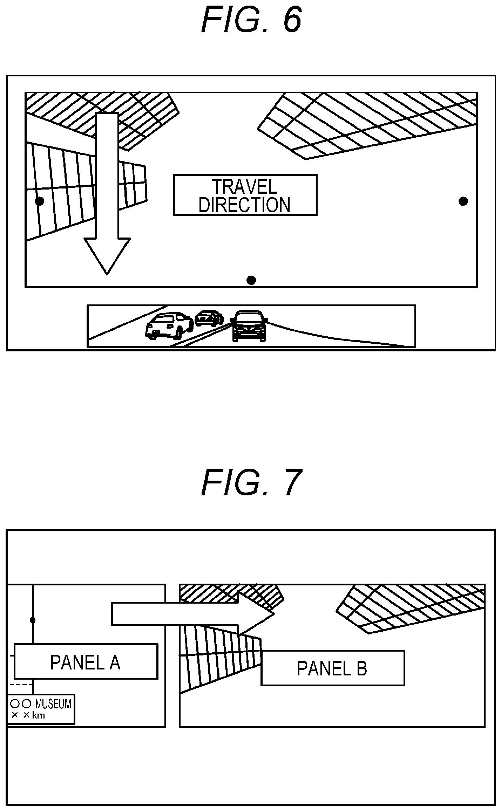

Fig. 6 is a diagram (1) for explaining an animation of frame transition. A frame of Fig. 6 is displayed, for example, on the screen of the ceiling. In this case, in Fig. 6, an upper portion of the screen is located closer to the rear of the vehicle than a lower portion of the screen (the lower portion of the screen is located closer to the front of the vehicle than the upper portion of the screen). In this case, the movement of the frame in the direction parallel to the travel direction means that the frame moves in a scrolling manner in the direction indicated by the arrow in Fig. 6.

Here, in a case where an operation for switching from a frame that is being displayed to another frame in the same mode for the application is input, the image/sound creation unit 142 moves the before-switching frame and the after-switching frame in a first direction perpendicular to the vehicle travel direction. On the other hand, in a case where an operation for switching from a frame that is being displayed to another frame in a different mode for the application is input, the image/sound creation unit 142 moves the before-switching frame and the after-switching frame in a second direction parallel to the vehicle travel direction.

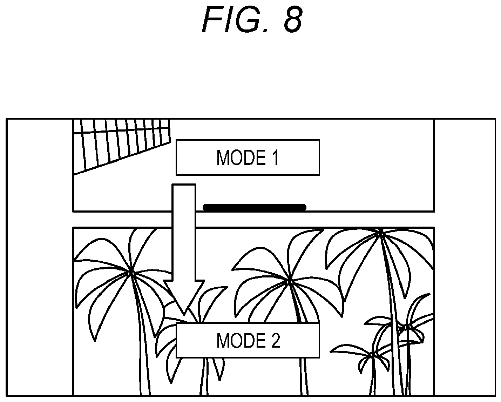

Fig. 7 is a diagram (2) for explaining an animation of frame transition. A direction indicated by an arrow in Fig. 7 is a direction perpendicular to the vehicle travel direction. Fig. 8 is a diagram (3) for explaining an animation of frame transition. A direction indicated by an arrow in Fig. 8 is a direction parallel to the vehicle travel direction.

Here, concerning the switching of the frame between the modes, since the occupant switches a frame aiming at a desired mode in which another frame is to be viewed, the number of frame transitions may be small. On the other hand, concerning the switching of the frame in the mode, that is, when a panel is switched in the same mode, like television channel zapping, a large number of frame transitions may occur.

In addition, in a case where the frame is moved in a direction perpendicular to the travel direction, for example, since a model in which a lower portion of the frame is the ground and an upper portion of the frame is the sky can be maintained, the occupant is less likely to get carsick even if the switching of the frame occurs frequently. On the other hand, in a case where the frame is moved in a direction parallel to the travel direction, the occupant is more likely to get carsick.

Therefore, in the present embodiment, the image processing apparatus 10 moves the frame in a direction parallel to the travel direction for a frame transition between modes, during which a frame switching frequency may be low. Conversely, the image processing apparatus 10 moves the frame in a direction perpendicular to the travel direction for a frame transition in one mode, during which a frame switching frequency may be high. As a result, the occurrence of carsickness of the occupant can be suppressed.

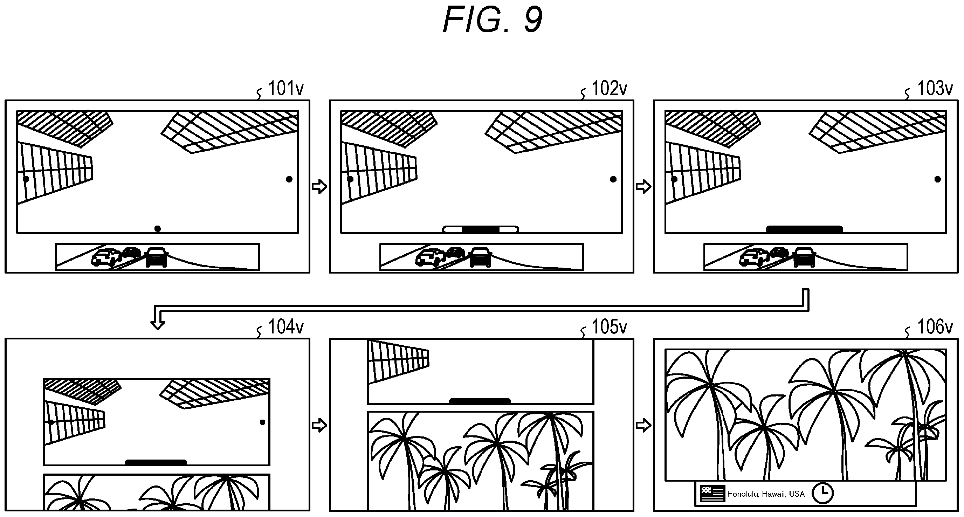

Fig. 9 is a diagram for explaining an animation of frame transition between modes. First, the occupant points out a black dot at a lower portion of a panel by gesture (101v). Then, the dot spreads horizontally, and a meter accumulates (102v). When the meter is full, it is determined that the panel is selected (103v), and the panel becomes small (104v). Then, as if an after-switching panel pushes the before-switching panel upward, each of the panels moves (in a scrolling manner) from a lower side to an upper side (105v). Then, the switching of the panel between the modes is completed (106v). Note that the black dot used for a panel switching input may be provided at an upper portion of the panel. In this case, if the black dot located at the upper portion of the panel is pointed out, the panel moves (in a scrolling manner) from the upper side to the lower side.

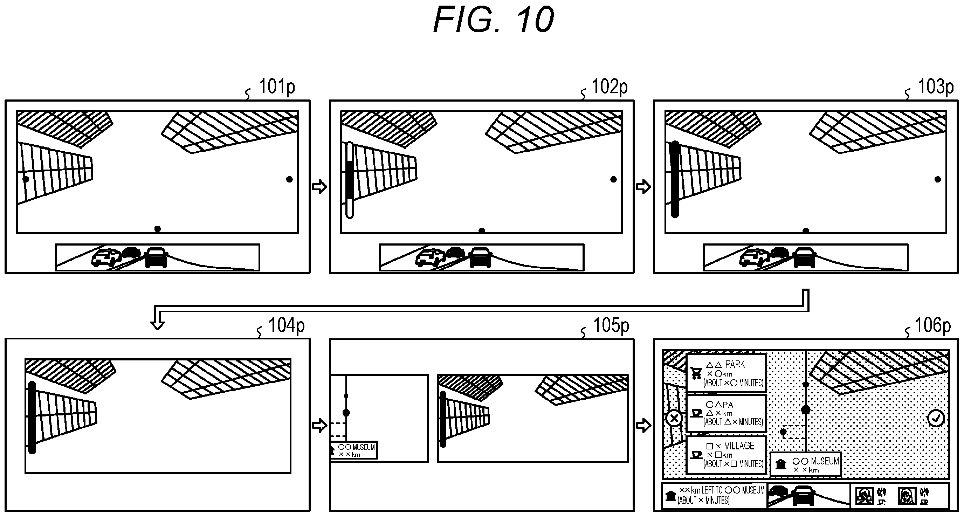

Fig. 10 is a diagram for explaining an animation of frame transition in one mode. First, the occupant points out a black dot at a left end portion of a panel by gesture (101p). Then, the dot spreads vertically, and a meter accumulates (102p). When the meter is full (103p), the panel becomes small (104p). Then, as if an after-switching panel pushes the before-switching panel rightward, each of the panels moves (in a scrolling manner) from a left side to a right side (105p). Then, the switching of the panel in the mode is completed (106p). Note that in a case where a black dot located at a right portion of the panel is pointed out by gesture, the panel moves (in a scrolling manner) from the right side to the left side.

In 104v of Fig. 9 and in 104p of Fig. 10, the image/sound creation unit 142 displays the before-switching and after-switching frames in reduced size when moved. As a result, a display amount with respect to the entire frame is reduced, and the occupant feels as if a field of view is widened, so that the occupant is less likely to get carsick. Furthermore, at this time, the image/sound creation unit 142 can move the before-switching and after-switching frames at reduced brightness, thereby further preventing the occupant from getting carsick.

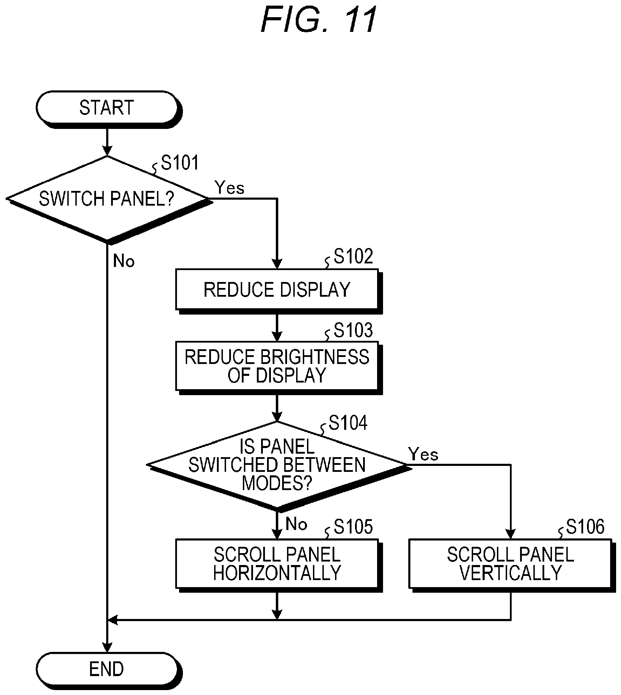

Fig. 11 is a flowchart illustrating a flow of processing by the image processing apparatus according to the first embodiment. As illustrated in Fig. 11, the image processing apparatus 10 stands by while a panel switching operation is not performed (step S101, No).

In a case where a panel switching operation is input (step S101, Yes), the image processing apparatus 10 reduces a display of a panel (step S102). Then, the image processing apparatus 10 reduces a brightness of the display of the panel (step S103).

Here, the image processing apparatus 10 determines whether or not the panel is switched between modes (step S104). In a case where the panel is switched between modes (step S104, Yes), the image processing apparatus 10 scrolls the before-switching and after-switching panels vertically (in a direction parallel to the travel direction) (step S106). In a case where the panel is not switched between modes (step S104, No), the image processing apparatus 10 scrolls the before-switching and after-switching panels horizontally (in a direction perpendicular to the travel direction) (step S105).

An image processing method for each panel will be described. The image/sound creation unit 142 creates a frame in which a destination is shown on a lower side thereof and a current location is shown on an upper side thereof, as a frame showing a route from the current location to the destination to be displayed on a screen provided on the ceiling of the vehicle.

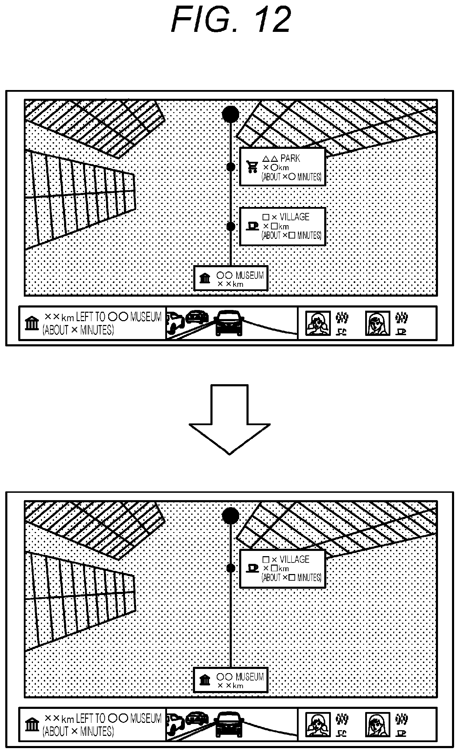

In a normal car navigation system, a destination is shown on an upper side of a frame and a current location is shown on a lower side of the frame. In contrast, as illustrated in Fig. 12, in the present embodiment, in a case where a route is displayed on the screen of the ceiling, the image processing apparatus 10 displays a current location on an upper side of the frame and displays a destination on a lower side of the frame to match a travel direction with the travel direction of the route.

Fig. 12 is a diagram illustrating an example of a frame in which a route is displayed. As illustrated in Fig. 12, since the screen on the ceiling is large, a frame displayed thereon occupies most of a field of view of an occupant. Thus, when a GUI on the frame greatly moves, the occupant is likely to get carsick. In order to avoid this, the image processing apparatus 10 makes a route simplified to be shown in a straight line with a current location and a destination being fixed. Moreover, the image processing apparatus 10 can recognize a current traveling position in terms of a distance by moving a spot such as a sightseeing spot or a service area between the current location and the destination. In the example of Fig. 12, after passing through ΔΔ Park, the image processing apparatus 10 erases an icon corresponding thereto from the route.

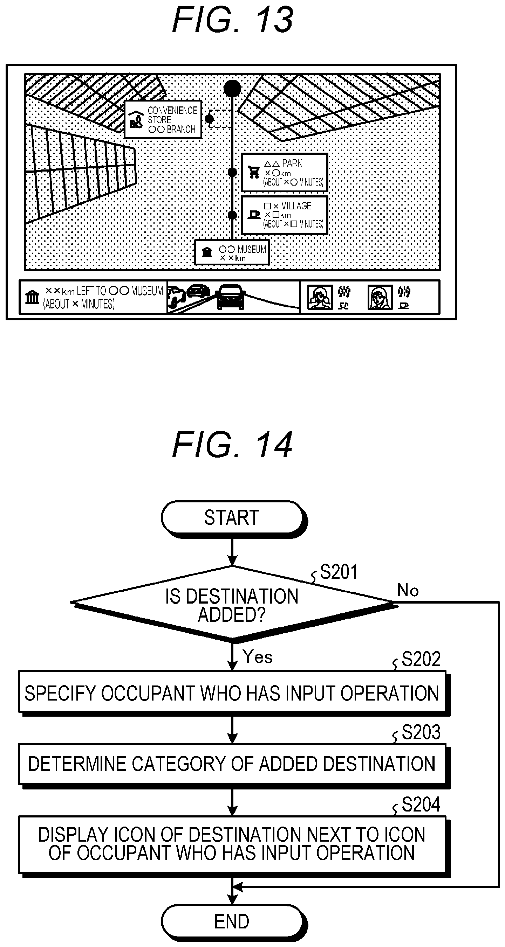

A frame displayed on the screen of the ceiling can be operated by a plurality of occupants. For example, each of a plurality of occupants can arbitrarily add a destination to a car navigation panel. In such a case, as illustrated in Fig. 13, the image/sound creation unit 142 creates a frame displaying a route from the current location to the destination, an icon indicating a category of the destination, and an icon indicating an occupant who has set the destination. For each destination added to the car navigation panel, the image processing apparatus 10 displays an icon of an occupant who has added the destination. Fig. 13 is a diagram illustrating an example of a frame in which icons of destinations and occupants are displayed.

A flow of destination adding processing by the image processing apparatus 10 will be described. Fig. 14 is a flowchart illustrating a flow of destination adding processing. As illustrated in Fig. 14, first, the image processing apparatus 10 stands by until a destination adding operation is input (step S201, No).

When a destination adding operation is input (step S201, Yes), the image processing apparatus 10 specifies an occupant who has input the operation (step S202). Then, the image processing apparatus 10 specifies an occupant who has input the operation (step S202). Further, the image processing apparatus 10 determines a category of an added destination (step S203). Then, the image processing apparatus 10 displays an icon of the destination next to an icon of the occupant who has input the operation.

Categories of destinations are greatly classified into layover and final destination. The categories classified as layover include toilet break, meal break, and the like. Examples of destinations included in the toilet break category include a service area and a parking area. In addition, examples of categories classified as meal break include a restaurant and a convenience store.

In addition, the categories classified as final destination include shopping, public facility, and sightseeing spot. Examples of destinations included in the shopping category include a shopping mall and a supermarket. Furthermore, examples of destinations included in the public facility category include a library, a city hall, a school, a railway station, a roadside station, and a bus terminal. In addition, examples of destinations included in the sightseeing spot category include an amusement park, a museum, and a zoo.

For example, in a case where an occupant adds a convenience store as a destination, an icon of the occupant and an icon of a meal break category are added to a frame. As a result, it is possible to notify a driver or the like, for example, that a child on a back seat desires a toilet break or a meal break. In addition, for example, in a case where a plurality of persons uses one vehicle for ride-sharing (riding together), each occupant can easily notify another occupant of a desired destination.

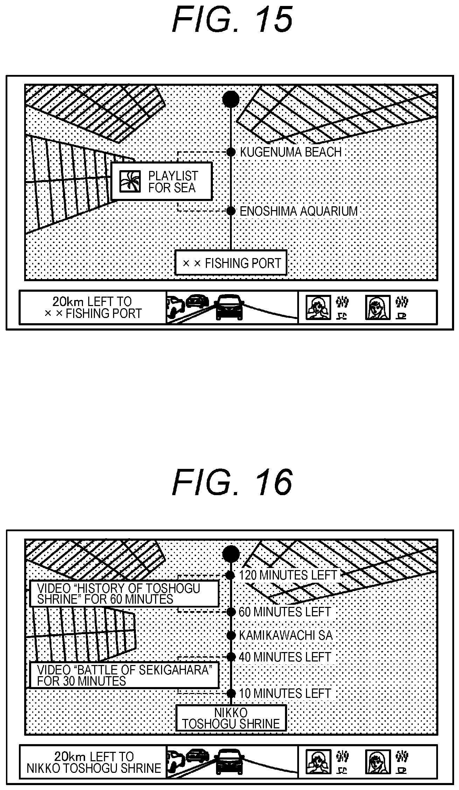

Furthermore, the image/sound creation unit 142 further creates a sound for reproducing music mapped to a current location in advance. Fig. 15 is a diagram illustrating an example of a frame in which a playlist is displayed. As illustrated in Fig. 15, a position to which the playlist has been mapped in advance may be shown on the route. When the vehicle approaches the position to which the playlist has been mapped, the image processing apparatus 10 outputs the created music.

Here, an automated driving control apparatus 60 is an apparatus that controls a speed and the like during automated driving. The automated driving control apparatus 60 is, for example, an engine control unit (ECU). Further, a route control apparatus 70 is an apparatus that determines a route during automated driving. The automated driving control apparatus 60 and the route control apparatus 70 can change a route to the destination and a traveling speed of the vehicle according to a time at which a frame created by the image/sound creation unit 142 is displayed (a content reproduction time).

Fig. 16 is a diagram illustrating an example of a frame in which videos to be reproduced are displayed. For example, as illustrated in Fig. 16, the automated driving control apparatus 60 and the route control apparatus 70 control a route or a traveling speed to arrive at a destination after reproducing a 60-minute video and a 30-minute video.

The image processing apparatus 10 can move a frame between screens according to an occupant's operation. For example, the image processing apparatus 10 can display a route displayed on the car navigation system on the screen of the ceiling.

At this time, in a case where an operation for displaying, on the screen provided on the ceiling of the vehicle, a first frame displayed on the car navigation system of the vehicle, in which a route from a current location to a destination is displayed with the destination being shown on an upper side thereof and the current location being shown on a lower side thereof, is input, the image/sound creation unit 142 creates a second frame with the destination being shown on a lower side thereof and the current location being shown on an upper side thereof as a frame to be displayed on the screen provided on the ceiling.

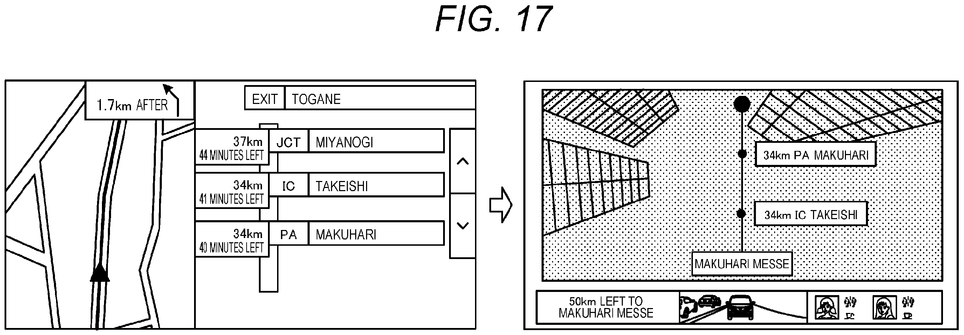

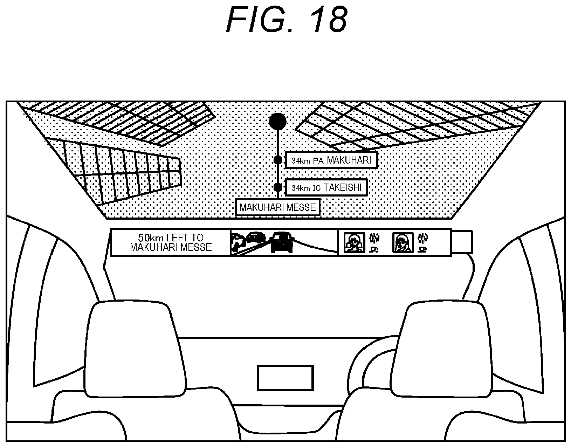

Fig. 17 is a diagram illustrating a shift of a frame between screens. A route displayed on the car navigation system is illustrated in the left side of Fig. 17. In addition, a route displayed on the screen of the ceiling is illustrated on the right side of Fig. 17. As illustrated in Fig. 17, a vertical positional relationship, for example, between "Makuhari" and "Takeishi" is reversed between the car navigation system and the screen of the ceiling. Fig. 18 is a diagram illustrating an example of a frame after the shift. As illustrated in Fig. 18, since the destination is displayed ahead on the screen of the ceiling, the occupant can intuitively grasp the route.

### (Effects of First Embodiment)

As having been described so far, the image processing apparatus includes: a creation unit (the image/sound creation unit 142 in the embodiment) that creates a frame belonging to one of a plurality of modes as a frame of an application to be displayed on a screen provided in a vehicle; and a switching unit (the image/sound creation unit 142 in the embodiment) that moves before-switching and after-switching frames in a first direction parallel to or perpendicular to a vehicle travel direction in a case where an operation for switching from a frame that is being displayed to another frame in the same mode for the application is input, and moves before-switching and after-switching frames in a second direction perpendicular to the first direction in a case where an operation for switching from a frame that is being displayed to another frame in a different mode for the application is input. For example, the image processing apparatus can determine a frame movement direction depending on a frequency of frame switching between modes and a frequency of frame switching in one mode. Therefore, according to the first embodiment, it is possible to display a frame that is comfortable for an occupant.

in a case where the operation for switching from a frame that is being displayed to another frame in the same mode for the application is input, the switching unit moves the before-switching and after-switching frames in the first direction perpendicular to the vehicle travel direction, and in a case where the operation for switching from a frame that is being displayed to another frame in a different mode for the application is input, the switching unit moves the before-switching and after-switching frames in the second direction parallel to the vehicle travel direction.

The switching unit displays the before-switching and after-switching frames in reduced size when moved. Therefore, according to the first embodiment, it is possible to make an occupant who operates a frame less likely to get carsick.

The switching unit moves the before-switching and after-switching frames at reduced brightness. Therefore, according to the first embodiment, it is possible to make an occupant who operates a frame less likely to get carsick.

The creation unit creates a frame in which a destination is shown on a lower side thereof and a current location is shown on an upper side thereof, as a frame showing a route from the current location to the destination to be displayed on a screen provided on a ceiling of the vehicle. Therefore, according to the first embodiment, it is possible to display information in such a manner that the information is easy for an occupant to intuitively understand.

In a case where an operation for displaying, on a screen provided on a ceiling of the vehicle, a first frame displayed on a car navigation system of the vehicle, in which a route from a current location to a destination is displayed with the destination being shown on an upper side thereof and the current location being shown on a lower side thereof, is input, the creation unit creates a second frame with the destination being shown on a lower side thereof and the current location being shown on an upper side thereof as a frame to be displayed on the screen provided on the ceiling. Therefore, according to the first embodiment, it is possible to display information in such a manner that the information is easy for an occupant to intuitively understand in accordance with the screen.

The creation unit creates a frame displaying a route from a current location to a destination, an icon indicating a category of the destination, and an icon indicating an occupant who has set the destination. Therefore, according to the first embodiment, in particular during ride-sharing or the like, an occupant's desire can be easily notified to another occupant.

The creation unit further creates a sound for reproducing music mapped to a current location in advance. Therefore, according to the first embodiment, an occupant can listen to music suitable for the location.

The image processing apparatus further includes a travel control unit that changes a route to a destination and a traveling speed of the vehicle according to a time at which the frame created by the creation unit is displayed. Therefore, according to the first embodiment, an occupant can watch a video up to the end of the video. For example, according to the first embodiment, during a travel or the like, the occupant can learn information about a place that the occupant is to visit in advance.

### [2. Example of Application to Mobile Body]

The technology according to the present disclosure (present technology) can be applied to various products. For example, the technology according to the present disclosure may be achieved as a device mounted on any type of mobile body such as a vehicle, an electric vehicle, a hybrid electric vehicle, a motorcycle, a bicycle, a personal mobility, an airplane, a drone, a ship, or a robot.

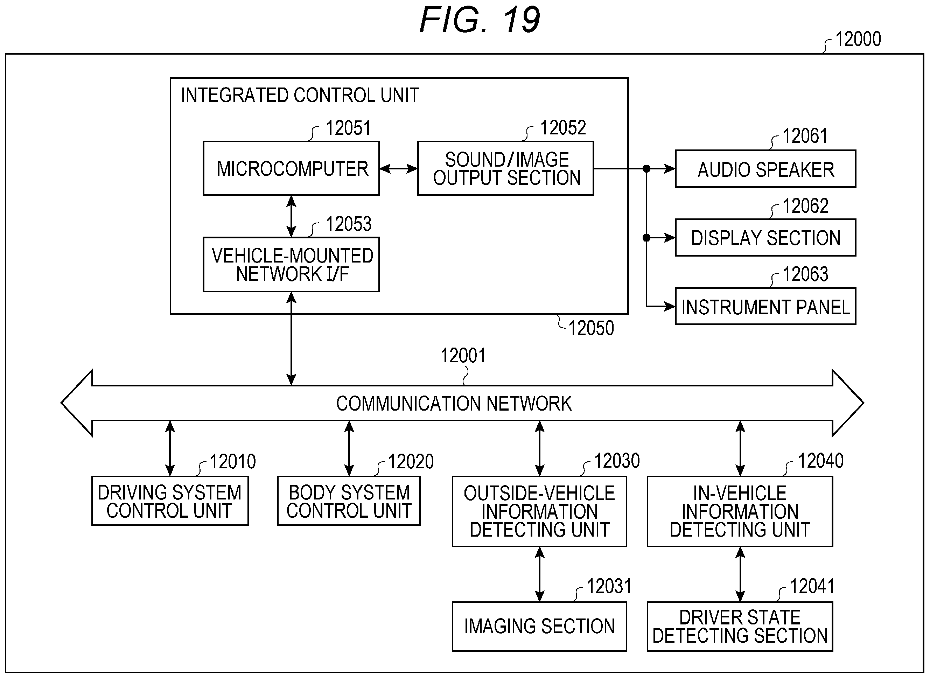

Fig. 19 is a block diagram depicting an example of schematic configuration of a vehicle control system as an example of a mobile body control system to which the technology according to an embodiment of the present disclosure can be applied.

The vehicle control system 12000 includes a plurality of electronic control units connected to each other via a communication network 12001. In the example depicted in Fig. 19, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle to travel autonomously without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound or an image to an output device capable of visually or auditorily notifying information to an occupant of the vehicle or the outside of the vehicle. In the example of Fig. 19, an audio speaker 12061, a display section 12062, and an instrument panel 12063 are illustrated as the output device. The display section 12062 may, for example, include at least one of an on-board display or a head-up display.

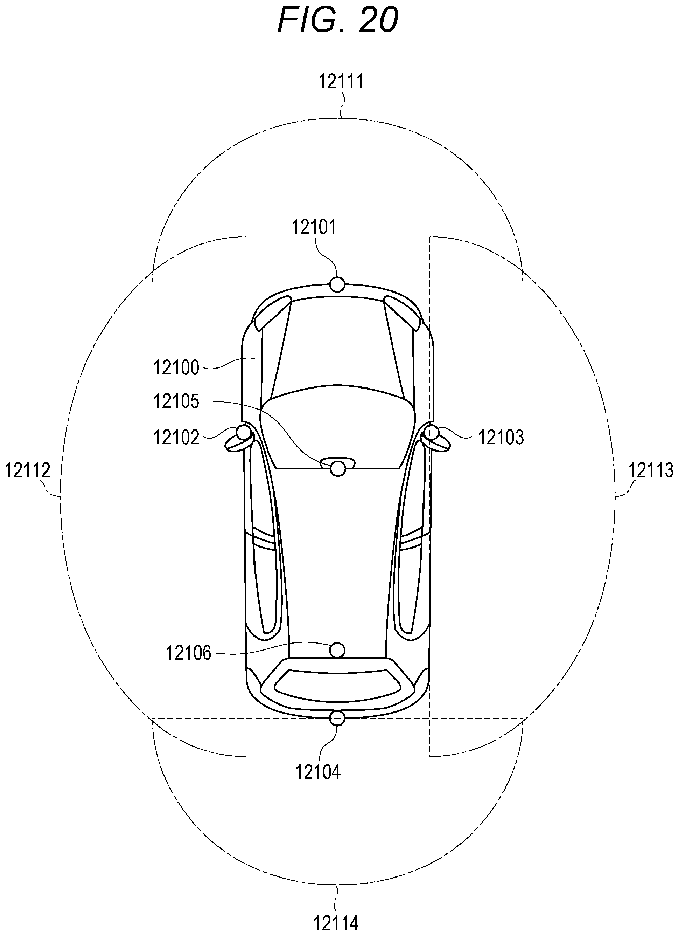

Fig. 20 is a diagram (1) depicting an example of the installation position of the imaging section.

In Fig. 20, the imaging section 12031 includes imaging sections 12101, 12102, 12103, 12104, 12105, and 12106.

The imaging sections 12101, 12102, 12103, 12104, 12105, and 12106 are, for example, disposed at positions on a front nose, sideview mirrors, a rear bumper, and a back door of the vehicle 12100 as well as a position on an upper side of a windshield within the interior of the vehicle and a roof, or the like. The imaging section 12101 provided to the front nose and the imaging section 12105 provided to the upper side of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The imaging section 12105 provided to the upper side of the windshield within the interior of the vehicle is used mainly to detect a preceding vehicle, a pedestrian, an obstacle, a signal, a traffic sign, a lane, or the like. The imaging section 12106 provided in the roof mainly captures an image upwardly.

Incidentally, Fig. 20 depicts an example of imaging ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel autonomously without depending on the operation of the driver or the like.

For example, the microcomputer 12051 can classify three-dimensional object data on three-dimensional objects into three-dimensional object data of a twowheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. Further, the sound/image output section 12052 may also control the display section 12062 so that an icon or the like representing the pedestrian is displayed at a desired position.

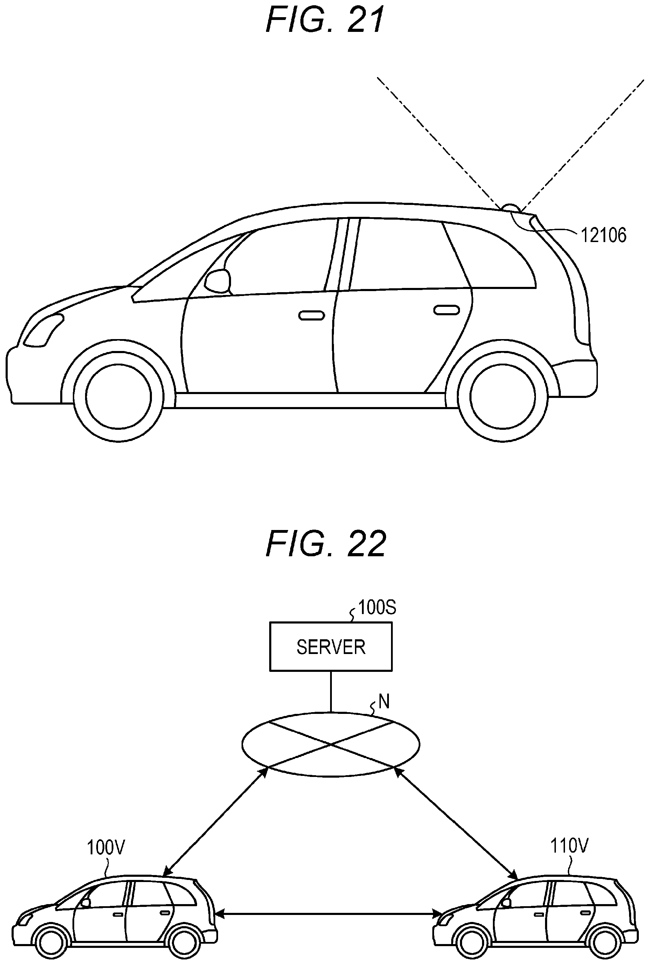

Fig. 21 is a diagram (2) depicting an example of the installation position of the imaging section. As illustrated in Fig. 21, the imaging section 12106 captures an image above the vehicle. The imaging section 12106 may be a wide-angle camera or an all-around camera.

An example of the vehicle control system to which the technology according to the present disclosure can be applied has been described above. The technology according to the present disclosure can be applied to the microcomputer 12051 among the above-described configurations. Specifically, the processing by the display output control unit 14 of the image processing apparatus 10 is achieved by the microcomputer 12051. Furthermore, the image above the vehicle described with reference to Fig. 4, etc. may be captured by the imaging section 12106.

The vehicle on which the image processing apparatus is mounted may be connected to a network. Fig. 22 is a diagram illustrating an example of a configuration of a network system. As illustrated in Fig. 22, a vehicle 100V including the image processing apparatus may be connected to another vehicle 110V for data communication. Furthermore, the vehicle 100V may be connected to a server 100S via a network N for communication. The network N is, for example, the Internet. In this case, the image processing apparatus provided in the vehicle 100V can acquire content from the server 100S or the vehicle 110V.

Note that a system including each apparatus of Fig. 1 may be achieved as one device. That is, as one embodiment, a device having a function similar to that of at least one of the image display apparatus 40, the sound output apparatus 50, the automated driving control apparatus 60, and the route control apparatus 70 in addition to a function similar to that of the image processing apparatus 10 can be achieved. For example, an image processing apparatus having functions similar to those of all of the image processing apparatus 10, the image display apparatus 40, the sound output apparatus 50, the automated driving control apparatus 60, and the route control apparatus 70 can provide processing equivalent to that by the system including all of the apparatuses in Fig. 1.

Furthermore, the functions of the information processing unit 13 and the display output control unit 14 in Fig. 1 may be provided in a server on a network outside the vehicle, and the vehicle and the server may communicate with each other. In this case, the image display apparatus 40, the sound output apparatus 50, the automated driving control apparatus 60, and the route control apparatus 70 may be controlled by the server.

Note that the present technology can also have the following configurations.
(1) An image processing apparatus including:
   a creation unit that creates a frame belonging to one of a plurality of modes as a frame of an application to be displayed on a screen provided in a vehicle; and
   a switching unit that moves before-switching and after-switching frames in a first direction parallel to or perpendicular to a vehicle travel direction in a case where an operation for switching from a frame that is being displayed to another frame in the same mode for the application is input, and moves before-switching and after-switching frames in a second direction perpendicular to the first direction in a case where an operation for switching from a frame that is being displayed to another frame in a different mode for the application is input.
(2) The image processing apparatus according to (1), in which in a case where the operation for switching from a frame that is being displayed to another frame in the same mode for the application is input, the switching unit moves the before-switching and after-switching frames in the first direction perpendicular to the vehicle travel direction, and in a case where the operation for switching from a frame that is being displayed to another frame in a different mode for the application is input, the switching unit moves the before-switching and after-switching frames in the second direction parallel to the vehicle travel direction.
(3) The image processing apparatus according to (1) or (2), in which the switching unit displays the before-switching and after-switching frames in reduced size when moved.
(4) The image processing apparatus according to any one of (1) to (3), in which the switching unit moves the before-switching and after-switching frames at reduced brightness.
(5) The image processing apparatus according to any one of (1) to (4), in which the creation unit creates a frame in which a destination is shown on a lower side thereof and a current location is shown on an upper side thereof, as a frame showing a route from the current location to the destination to be displayed on a screen provided on a ceiling of the vehicle.
(6) The image processing apparatus according to any one of (1) to (4), in which in a case where an operation for displaying, on a screen provided on a ceiling of the vehicle, a first frame displayed on a car navigation system of the vehicle, in which a route from a current location to a destination is displayed with the destination being shown on an upper side thereof and the current location being shown on a lower side thereof, is input, the creation unit creates a second frame with the destination being shown on a lower side thereof and the current location being shown on an upper side thereof as a frame to be displayed on the screen provided on the ceiling.
(7) The image processing apparatus according to any one of (1) to (6), in which the creation unit creates a frame displaying a route from a current location to a destination, an icon indicating a category of the destination, and an icon indicating an occupant who has set the destination.
(8) The image processing apparatus according to any one of (1) to (7), in which the creation unit further creates a sound for reproducing music mapped to a current location in advance.
(9) The image processing apparatus according to any one of (1) to (8), further including a travel control unit that changes a route to a destination and a traveling speed of the vehicle according to a time at which the frame created by the creation unit is displayed.
(10) A display system including a screen provided in a vehicle, a projector that projects an image on the screen, and an image processing apparatus,
   in which the image processing apparatus includes:
   a creation unit that creates a frame belonging to one of a plurality of modes as a frame of an application to be displayed on the screen provided in the vehicle; and
   a switching unit that moves before-switching and after-switching frames in a first direction parallel to or perpendicular to a vehicle travel direction in a case where an operation for switching from a frame that is being displayed to another frame in the same mode for the application is input, and moves before-switching and after-switching frames in a second direction perpendicular to the first direction in a case where an operation for switching from a frame that is being displayed to another frame in a different mode for the application is input.
(11) An image processing method performed by a computer, the image processing method including:
   creating a frame belonging to one of a plurality of modes as a frame of an application to be displayed on a screen provided in a vehicle; and
   moving before-switching and after-switching frames in a first direction parallel to or perpendicular to a vehicle travel direction in a case where an operation for switching from a frame that is being displayed to another frame in the same mode for the application is input, and moving before-switching and after-switching frames in a second direction perpendicular to the first direction in a case where an operation for switching from a frame that is being displayed to another frame in a different mode for the application is input.
(12) A recording medium recording a program for causing a computer to function as:
   a creation unit that creates a frame belonging to one of a plurality of modes as a frame of an application to be displayed on a screen provided in a vehicle; and
   a switching unit that moves before-switching and after-switching frames in a first direction parallel to or perpendicular to a vehicle travel direction in a case where an operation for switching from a frame that is being displayed to another frame in the same mode for the application is input, and moves before-switching and after-switching frames in a second direction perpendicular to the first direction in a case where an operation for switching from a frame that is being displayed to another frame in a different mode for the application is input.

### REFERENCE SIGNS LIST

- 10: Image processing apparatus
- 11: Input unit
- 12: Communication unit
- 13: Information processing unit
- 14: Display output control unit
- 20: Projector
- 30: Projector screen
- 31: Liquid crystal display
- 40: Image display apparatus
- 50: Sound output apparatus
- 60: Automated driving control apparatus
- 70: Route control apparatus
- 141: Content acquisition unit
- 142: Image/sound creation unit
- 143: Input information accumulation unit

## Claims

1. An image processing apparatus comprising:
a creation unit that creates a frame belonging to one of a plurality of modes as a frame of an application to be displayed on a screen provided in a vehicle; and
a switching unit that moves before-switching and after-switching frames in a first direction parallel to or perpendicular to a vehicle travel direction in a case where an operation for switching from a frame that is being displayed to another frame in the same mode for the application is input, and moves before-switching and after-switching frames in a second direction perpendicular to the first direction in a case where an operation for switching from a frame that is being displayed to another frame in a different mode for the application is input.

2. The image processing apparatus according to claim 1, wherein in a case where the operation for switching from a frame that is being displayed to another frame in the same mode for the application is input, the switching unit moves the before-switching and after-switching frames in the first direction perpendicular to the vehicle travel direction, and in a case where the operation for switching from a frame that is being displayed to another frame in a different mode for the application is input, the switching unit moves the before-switching and after-switching frames in the second direction parallel to the vehicle travel direction.

3. The image processing apparatus according to claim 1, wherein the switching unit displays the before-switching and after-switching frames in reduced size when moved.

4. The image processing apparatus according to claim 1, wherein the switching unit moves the before-switching and after-switching frames at reduced brightness.

5. The image processing apparatus according to claim 1, wherein the creation unit creates a frame in which a destination is shown on a lower side thereof and a current location is shown on an upper side thereof, as a frame showing a route from the current location to the destination to be displayed on a screen provided on a ceiling of the vehicle.

6. The image processing apparatus according to claim 1, wherein in a case where an operation for displaying, on a screen provided on a ceiling of the vehicle, a first frame displayed on a car navigation system of the vehicle, in which a route from a current location to a destination is displayed with the destination being shown on an upper side thereof and the current location being shown on a lower side thereof, is input, the creation unit creates a second frame with the destination being shown on a lower side thereof and the current location being shown on an upper side thereof as a frame to be displayed on the screen provided on the ceiling.

7. The image processing apparatus according to claim 1, wherein the creation unit creates a frame displaying a route from a current location to a destination, an icon indicating a category of the destination, and an icon indicating an occupant who has set the destination.

8. The image processing apparatus according to claim 1, wherein the creation unit further creates a sound for reproducing music mapped to a current location in advance.

9. The image processing apparatus according to claim 1, further comprising a travel control unit that changes a route to a destination and a traveling speed of the vehicle according to a time at which the frame created by the creation unit is displayed.

10. A display system comprising a screen provided in a vehicle, a projector that projects an image on the screen, and an image processing apparatus,
wherein the image processing apparatus includes:
a creation unit that creates a frame belonging to one of a plurality of modes as a frame of an application to be displayed on the screen provided in the vehicle; and
a switching unit that moves before-switching and after-switching frames in a first direction parallel to or perpendicular to a vehicle travel direction in a case where an operation for switching from a frame that is being displayed to another frame in the same mode for the application is input, and moves before-switching and after-switching frames in a second direction perpendicular to the first direction in a case where an operation for switching from a frame that is being displayed to another frame in a different mode for the application is input.

11. An image processing method performed by a computer, the image processing method comprising:
creating a frame belonging to one of a plurality of modes as a frame of an application to be displayed on a screen provided in a vehicle; and
moving before-switching and after-switching frames in a first direction parallel to or perpendicular to a vehicle travel direction in a case where an operation for switching from a frame that is being displayed to another frame in the same mode for the application is input, and moving before-switching and after-switching frames in a second direction perpendicular to the first direction in a case where an operation for switching from a frame that is being displayed to another frame in a different mode for the application is input.

12. A recording medium recording a program for causing a computer to function as:
a creation unit that creates a frame belonging to one of a plurality of modes as a frame of an application to be displayed on a screen provided in a vehicle; and
a switching unit that moves before-switching and after-switching frames in a first direction parallel to or perpendicular to a vehicle travel direction in a case where an operation for switching from a frame that is being displayed to another frame in the same mode for the application is input, and moves before-switching and after-switching frames in a second direction perpendicular to the first direction in a case where an operation for switching from a frame that is being displayed to another frame in a different mode for the application is input.
